# EUROPEAN PATENT APPLICATION

(11) **EP 3 032 381 A1**
(43) Date of publication of application: **15.06.2016**
(21) Application number: 15181186.6
(22) Date of filing: 17.08.2015
(51) Int. Cl.: G06F 3/038, G06F 3/0354, G06F 3/0346

(54) **A DIGITAL STYLUS**

(30) Priority: 11.12.2014 HK 14112469
(71) Applicant: Coco Color Company Limited, Hong Kong (HK)
(72) Inventor: BELL, Hugh, Hong Kong (HK)
(74) Representative: inCompass IP Europe Limited

(57) **Abstract**

The present invention relates to a digital stylus for an electronic device having an input screen. The digital stylus comprising an operative portion adapted to interact with the input screen, and the electronic device adapted to perform one or more functions corresponding to an interaction between the operative portion and the input screen; and a communication module adapted to communicate with the electronic device to set one or more of the following: the functions and one or more characteristics of the functions.

## Description

### Field of the Invention

The invention relates to a digital stylus for use with electronic devices.

### Background of the Invention

Various pen-shaped apparatus or styli have been designed and developed as inputting tools for use with portable electronic devices such as smart phones, personal tablet computers (tablet PCs), personal data assistants (PDAs), or in general, any computer with a touch-sensitive input screen. A conventional stylus is generally configured with a pen-shaped body for easy gripping by a user, and a tip for engaging the input screen of an electronic device so that the user can tap, handwrite, or draw on the input screen, usually with relatively higher precision and better control than using a finger of a user.

Recent developments have been focused on improving user experience by including supplementary functions to styli. However, stylus technologies available nowadays are still very much dependent on the software programs or mobile apps installed on the electronic devices, with styli still very much being passive input tools, serving as an alternative to the fingers of a user. Accordingly, the functionality of prior styli is still rather limited.

The object of the present invention is to provide a digital stylus in which the aforesaid shortcomings are mitigated, or at least to provide a useful alternative.

### Summary of the Invention

In one aspect of the present invention, there is provided a digital stylus for an electronic device having an input screen, the digital stylus comprising an operative portion adapted to interact with the input screen, and the electronic device adapted to perform one or more functions corresponding to an interaction between the operative portion and the input screen; and a communication module adapted to communicate with the electronic device to set one or more of the following: the functions and one or more characteristics of the functions.

The summary of the invention does not necessarily disclose all the features essential for defining the invention. The invention may reside in a sub-combination of the features in the embodiments described below.

Throughout this specification, including the claims, the words "comprise", "comprising", and other like terms are to be construed in an inclusive sense, that is, in the sense of "including, but not limited to", and not in an exclusive or exhaustive sense, unless explicitly stated otherwise or the context clearly requires otherwise.

### Brief Description of the Drawings

The foregoing and further features of the present invention will be apparent from the following description of preferred embodiments which are provided by way of example only, with reference to the accompanying figures, of which:
Figure 1 is a schematic drawing showing the front view of a first embodiment of the present invention;
Figure 2 is a schematic drawing showing the front view of a second embodiment of the present invention;
Figure 3 is a side cross-sectional view showing the internal structure of the embodiment of Figure 2;
Figure 4 is a side cross-sectional view showing the internal structure of the embodiment of Figure 2 with a different tip; and
Figure 5 is a schematic drawing showing the front view of a third embodiment of the present invention.

### Description of Preferred Embodiments

The following description is of preferred embodiments, but by way of example only, and without limitation to the combination of features necessary for carrying the invention into effect.

Reference in this specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

The present invention relates to a digital stylus for use with electronic devices having an input screen. The electronic devices can be portable electronic devices such as smart phones, personal tablet computers (tablet PCs), personal data assistants (PDAs), or any computer with a touch-sensitive input screen. A digital stylus in accordance with embodiments of the present invention can also be arranged to operate with various operating systems for electronic devices such as, but not limited to, IOS, Android, and Windows.

Referring to the figures, embodiments of the present invention provide a digital stylus 10 for an electronic device having an input screen. The digital stylus 10 comprises an operative portion 20 adapted to interact with the input screen. The electronic device is adapted to perform one or more functions such as to display a mark corresponding to an interaction between the operative portion 20 and the input screen. The digital stylus 10 further comprises a communication module adapted to communicate with the electronic device to set the one or more functions and/or one or more characteristics of the performed function. For example, a user is allowed to select a function of "writing" at the stylus 10, and then further select the characteristic of "thickness" and/or "colour" of the line written by using the stylus 10. The functions may also comprise one or more of the following: starting an application, starting a video, starting an animation, playing media, and displaying a visual effect.

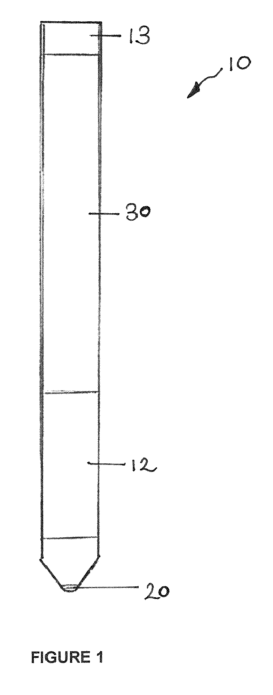

Referring to Figure 1, there is illustrated a digital stylus of an embodiment of the present invention. Particularly, Figure 1 shows a digital stylus 10 comprising a body 12 adapted to be gripped by a user. The body 12 can be covered with a rubber jacket 14 made with material such as carbon silicone for an improved feel when held by the user. The digital stylus 10 also comprises an operative portion 20, which can be capacitive in nature, adapted to interact with an input screen of an electronic device. Upon interaction of the operative portion 20 with the input screen, the electronic device is adapted to perform a function such as to display a mark corresponding to the interaction between the operative portion 20 and the input screen. The interaction can be in the form of physical engagement such as touching, writing, or tapping of the operative portion 20 on the input screen. Alternatively or additionally, the operative portion 20 can be arranged to interact with the input screen at a short distance from the surface of the input screen.

A printed circuit board (PCB) 16 and a battery 18 (not shown in Figure 1) can be provided within the body 12 for controlling and powering the operation of the digital stylus 10, respectively. A main switch 13 can also be provided at the body 12 for the user to power on/off the digital stylus 10.

The digital stylus 10 further comprises a communication module adapted to communicate with the electronic device. Specifically, when a user writes on the input screen of the electronic device with the stylus 10, by causing the operative portion 20 to interact with the input screen, to make a mark, the communication module actively sets one or more characteristics of the mark and instructs the device to display the mark with the set characteristics. This is in contrast with prior styli which serve only as dumb pens, whereby characteristics of the mark "written" by the pen need to be actively selected via the software programs or mobile apps in use on the electronic device.

Preferably, the communication module is adapted to communicate with the electronic device in a wireless manner. The communication module may also communicate wirelessly with a network to exchange information. The wireless transmission can be achieved by any wireless technology available such as, but not limited to, bluetooth, ultrasound, wifi, radio frequency, infrared (IR), near-field communication, or any combination of such technologies, the choice of which may depend on the requirements of specific applications. For example, the stylus 10 can be provided with a speaker for signal transmission via ultrasound tone detection. The stylus 10 can also be provided a radio-frequency identification (RFID) tag to wirelessly communication with a device configured with or connected with a RFID reader via radio frequency identification.

The characteristics of the mark displayed at the electronic device are actively set by the stylus 10 and include: visual form such as a line, a shape, an icon, a pattern or a combination thereof; line thickness; line type; and type of pattern etc. For example, the stylus 10 can be set to write on the input screen with marks imitating those being made by a pen or a pencil; or to draw on the input screen in a style imitating a marker, a crayon or a paintbrush in a specific colour, etc. The stylus 10 can also be set to input other types of characteristics or perform functions such as to play an audio or a video clip, to launch texts, images or animations, or to erase or undo other marks previously made via the input screen.

The stylus 10 can further comprise a display 30 for displaying the characteristics set by the stylus 10. For example, the display 30 can display the specific colour selected by the user, and the user will understand that a mark of this specific colour will be displayed at the electronic device if the user arranges the operative portion 20 to interact with the input screen. In the embodiment as shown in Figure 1, the display 30 is configured to extend around an external periphery of a part of the body 12 of the stylus 10. The display 30 may comprise, for example, RGB LED lights, OMLED lights and flexible LED media screens, etc.

In one embodiment of the present invention, the stylus 10 can be one of a set of a plurality of styli each of which is preset with a specific function and/or characteristic such as a specific colour in a specific style. For example, the stylus 10 can be one of a set of "electronic crayons", and the stylus 10 will allow users to draw marks in red in a crayon style. In another embodiment, the stylus 10 can also be one of a set of a plurality of styli each of which is preset with a specific colour, icon or pattern of a common theme. The theme can be based on a cartoon character or animation, or a festive event. For example, a set of styli could be provided with different Christmas icons and colours, etc.

The stylus 10 may further be provided with a switch for adjusting the preset functions and/or characteristic, for example, the intensity of the preset colour or the size of the preset icon. Preferably, the switch can be in the form of an electronic touch-sensitive sensor arranged on the body 12 or the display 30 of the stylus 10. For example, the user may adjust the intensity of the preset colour by touching the display 30 with a finger in a sliding motion, and the variation on the intensity of the preset colour will be displayed simultaneously at the display 30. Once a preferred intensity of the preset colour is selected, the selected intensity of the colour as shown at the display 30 will be the colour of the mark to be displayed at the electronic device when the operative portion 20 is arranged to interact with the input screen of the device.

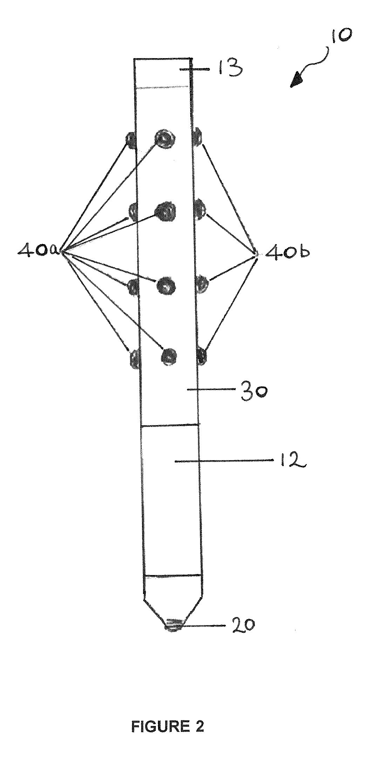

Figure 2 shows a further embodiment of the present invention. In this embodiment, the stylus 10 is configured with a plurality of buttons 40 for the user to select certain characteristics of the mark from a group of preset characteristics. For example, the plurality of buttons can represent different colours 40a and/or different styles or functions such as pen, pencil, marker, crayon or paintbrush 40b, different line thicknesses, and different line types (e.g. dotted, dashed). A user can therefore be allowed to select, and subsequently, to write in different colours and in different styles with the stylus 10. A display 30 can optionally be provided to display the selected colour and/or style.

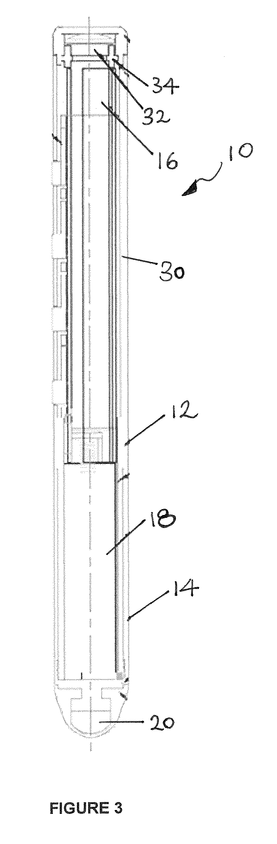

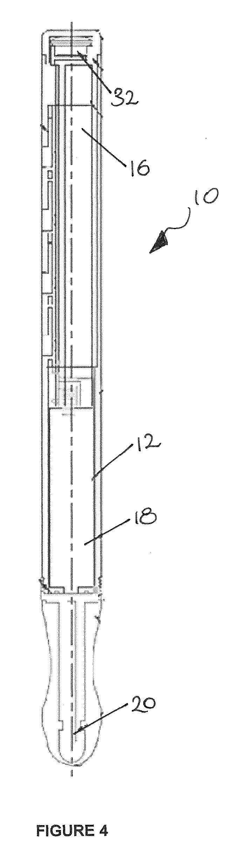

Figure 3 shows a side sectional view of the stylus 10 of Figure 2, revealing the internal structures of the stylus 10. Specifically, Figure 3 shows the PCB 16, the battery 18, as well as the body 12, the rubber jacket 14 covering the body 12, the display 30 and the operative portion 20. The stylus 10 in this embodiment also includes a speaker 32 arranged at a speaker holder 34 positioned at an end distal to the operative portion 20. The speaker 32 is adapted to produce audio effects such as operational sound effects or audio tracks to accompany the specific theme selected or preset for the stylus, and for a stylus provided with ultrasound, tone detection functionality, to emit ultrasound signal to the electronic device. The display 30 can optionally be provided to play clips of an animation or video such as movie trailers to accompany the theme selected or preset for the stylus. Figure 4 shows another embodiment of a similar stylus, showing an operative portion 20 with a different design.

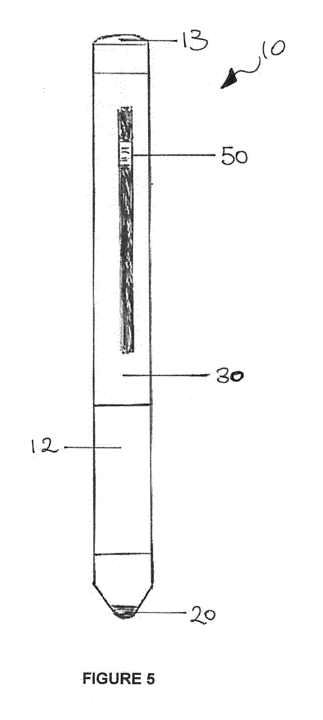

Figure 5 illustrates another embodiment of the present invention. In this embodiment, the stylus 10 comprises an input means in the form of a mechanical sliding switch 50 adapted to be slidably movable by the user to adjust and select characteristics of the marks. For example, the user can select a colour from a spectrum of different colours displayed at the display 30 by sliding the mechanical slider 50 with a finger. Upon selection of a specific colour, the user can further adjust the intensity of that selected colour by a similar sliding action on the slider switch 50, until a preferred intensity of the selected colour is achieved. Again, the selected colour will be shown at the display 30 and the colour shown will be identical to that of the mark to be displayed at the electronic device when the operative portion 20 is arranged to interact with the input screen of the device. The slider switch 50 can also be operated to adjust, for example, the thickness of a line, the thickness/size of an eraser, or the size of a shape or an icon, as long as the corresponding characteristics have been selected by the user.

Alternatively, the slider switch 50 can be in the form of an electronic touch-sensitive slider arranged at the body 12, or the display 30 of the stylus 10 in a similar manner as discussed earlier.

Furthermore, the stylus 10 can be configured to comprise a motion sensor for receiving motion signals from the user. In one embodiment, the user can simply shake the stylus 10 to randomly select a colour, icon or pattern, or to launch texts, images or animations on the device and control their movement on screen by waving the stylus accordingly. For example, the stylus 10 can be used by a child as a "magic wand" in which the child can simply wave the stylus 10 near the device to initiate the mentioned functions at the device. In another embodiment, the user is also allowed to share or exchange with another stylus user his tailored hue, icon or pattern by tapping his stylus with the stylus of the other stylus user. The stylus 10 can further be provided with an audio receiving means for receiving audio input commands.

Optionally, the operative portion 20 of the stylus 10 can be provided with a pressure sensitive function which determines certain characteristics of the marks. For example, the user can write on the input screen with less pressure to allow a thinner or lighter line to be drawn, or alternatively, write heavier on the input screen to allow a thicker or darker line to be drawn. Similarly, the user can also apply colour slowly to produce thinner lines or a lighter colour, or alternatively, apply colour quickly to produce thicker lines or a darker colour.

Optionally, the stylus 10 can be arranged to support a palm rejection function. When the user is writing with the stylus 10 on the input screen, and during the course of writing his hand happens to be in contact with the screen, only the interaction with the stylus will be recognised by the electronic device.

The digital stylus of embodiments of the present invention is advantageous in that the stylus is adapted to actively send instructions to an electronic device to set one or more characteristics of the marks to be displayed at the electronic device. This is in contrast to traditional styli which serve only as dumb pens and characteristics of the mark "written" by such pens can only be selected via the software programs or mobile apps in use at the time on the electronic device. Therefore, the functionality of prior styli is rather limited.

In addition, the styli of embodiments of the present invention allow users to adjust and select a preferred colour at the stylus, and subsequently, the stylus will instruct the electronic device to display that specific colour. The selected colour may not necessarily be one which is readily available in software programs or apps in use at the device, but is solely determined by the user's choice. Furthermore, the stylus can be provided with a display which shows the selection and adjustments chosen by the user. The selected colour as shown at the display will be identical to the colour of the mark to be "written" on, and thus shown at, the electronic device. Accordingly, the styli of embodiments of the present invention give stylus users a high degree of flexibility, variability, and improved control.

## Claims

1. A digital stylus for an electronic device having an input screen, the digital stylus comprising:
an operative portion adapted to interact with the input screen, and the electronic device adapted to perform one or more functions corresponding to an interaction between the operative portion and the input screen; and
a communication module adapted to communicate with the electronic device to set one or more of the following: the functions and one or more characteristics of the functions.

2. The digital stylus according to claim 1, wherein the functions comprise displaying of a mark.

3. The digital stylus according to claim 2, wherein the one or more characteristics of the mark displayed are selected from a group comprising a line, a shape, an icon, a pattern, and a combination thereof.

4. The digital stylus according to any one of claims 2 to 3, wherein the one or more characteristics of the mark displayed are selected from a group comprising colour, line thickness, line type, and a combination thereof.

5. The digital stylus according to any one of claims 1 to 4, wherein one or more of the following: the functions and one or more characteristics of the functions, are preset.

6. The digital stylus according to any one of claims 1 to 4, further comprising at least one input means operable by a user to select one or more of the following: the functions and one or more characteristics of the functions.

7. The digital stylus according to any one of claims 1 to 6, wherein the one or more characteristics comprise one or more subsets of characteristics selectable by a user.

8. The digital stylus according to claim 6, wherein the at least one input means comprises any one or any combination of: a sliding means slidably movable by the user; at least one button; an electronic touch sensor adapted to receive a touch signal from the user; a motion sensor for receiving a motion signal from the user.

9. The digital stylus according to claim 8, wherein the motion signal is generated by at least one of shaking and tapping of the stylus by the user.

10. The digital stylus according to any one of claims 1 to 9, further comprising a display for displaying one or more of the following: the functions and one or more characteristics of the functions.

11. The digital stylus according to claim 10, wherein the display is arranged to extend around an external periphery of at least part of the stylus.

12. The digital stylus according to any one of claims 1 to 11, further comprising an audio emitting means for emitting sound and/or an audio receiving means for receiving audio input.

13. The digital stylus according to claim 10, wherein the display is adapted to display a video.

14. The digital stylus according to any one of claims 1 to 13, wherein the communication module is adapted to wirelessly communicate with a network.

15. The digital stylus according to claim 1, wherein the functions comprise one or more of the following: starting an application, starting a video, starting an animation, playing media, and displaying a visual effect.
